(19) Europäisches Patentamt
European Patent Office
Office européen des brevets

(11) Veröffentlichungsnummer: **0 199 973 B1**

(12) **EUROPÄISCHE PATENTSCHRIFT**

(45) Veröffentlichungstag der Patentschrift: **15.04.92**

(51) Int. Cl.5: **C09B 35/14**, D06P 1/12, D06P 3/68

(21) Anmeldenummer: **86103867.7**

(22) Anmeldetag: **21.03.86**

Die Akte enthält technische Angaben, die nach dem Eingang der Anmeldung eingereicht wurden und die nicht in dieser Patentschrift enthalten sind.

# (54) Verfahren zur Herstellung von wasserunlöslichen Azofarbstoffen auf der Faser.

(30) Priorität: **29.03.85 DE 3511543**

(43) Veröffentlichungstag der Anmeldung:
**10.12.86 Patentblatt 86/45**

(45) Bekanntmachung des Hinweises auf die Patenterteilung:
**15.04.92 Patentblatt 92/16**

(84) Benannte Vertragsstaaten:
**BE CH DE FR GB IT LI NL**

(56) Entgegenhaltungen:
**FR-A- 1 420 324**
**FR-A- 2 149 416**
**FR-A- 2 349 676**

(73) Patentinhaber: **HOECHST AKTIENGESELLSCHAFT**
**Postfach 80 03 20**
**W-6230 Frankfurt am Main 80(DE)**

(72) Erfinder: **Hertel, Hasso, Dr.**
**Brunnenweg 10**
**W-6052 Mühlheim am Main(DE)**
Erfinder: **Hunger, Klaus, Dr.**
**Johann-Strauss-Strasse 35**
**W-6233 Kelkheim (Taunus)(DE)**
Erfinder: **Frölich, Heinrich, Dr.**
**Obernhäuser Weg 6**
**W-6272 Niedernhausen/Taunus(DE)**

**EP 0 199 973 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung liegt auf dem technischen Gebiet der Eisfarbenfärberei.

Zur Herstellung von blauen Azofarbstoffen auf der Faser nach den Methoden der Eisfarbentechnik durch Reaktion einer Diazokomponente mit einer Kupplungskomponente auf der Faser gibt es eine große Zahl von Möglichkeiten. Praktische Bedeutung haben vor allem die Bildung von Farbstoffen mit einer Kupplungskomponente aus der 2-Hydroxy-naphthalin-3-carbonsäurearylamid-Reihe und mit den aus Colour Index bekannten Diazokomponenten C.I. Azoic Diazo Component 20 [N-(4-Amino-2,5-diethoxy-phenyl)-benzamid], C.I. Azoic Diazo Component 22 [4-Amino-diphenylamin], C.I. Azoic Diazo Component 24 [N-(4-Amino-2,5-dimethoxy-phenyl)-benzamid], C.I. Azoic Diazo Component 35 [4'-Amino-4-methoxy-diphenylamin], C.I. Azoic Diazo Component 47 [ 4-Amino-3-methoxy-diphenylamin] und C.I. Azoic Diazo Component 48 [4,4'-Diamino-3,3'-dimethoxy-diphenyl] erlangt. Färbeweisen nach der Eisfarbentechnik, die sich für den Einsatz mit solchen Komponenten eignen und gebräuchlich sind, werden beispielsweise in H. Rath, Lehrbuch der Textilchemie, 3. Auflage, S. 548 ff., Springer-Verlag (1972), und in Melliand Textilberichte 30, 525-528 (1949), beschrieben.

Die oben erwähnte C.I. Azoic Diazo Component 48 wurde darüberhinaus im Beispiel 16 der französichen Patentanmeldungs-Veröffentlichung Nr. 2 349 676 als Diazokomponente in ein Druckverfahren eingesetzt, wobei die Fixierung des Azofarbstoffes auf dem Fasermaterial mittels Heißluft von 200 °C, demgemäß nicht nach einer Verfahrensweise der Eisfarbentechnik, erfolgte.

Es wurde nun gefunden, daß man auf der Faser nach den Methoden der Eisfarbentechnik Färbungen mit besseren Naßechtheiten herstellen kann, wenn man als bis-diazotierbare Diazokomponente ein 4,4'-Diamino-3,3'-dialkoxy-biphenyl mit Alkoxygruppen von 3 bis 5 C-Atomen oder ein 4,4'-Diamino-3,3'-di-[($C_1$-$C_3$)-alkoxy-($C_2$-$C_4$)-alkoxy]-biphenyl mit Alkoxyalkoxygruppen von insgesamt 3 bis 5 C-Atomen verwendet.

Die vorliegende Erfindung betrifft somit ein Verfahren zur Herstellung von wasserunlöslichen Disazofarbstoffen auf der Faser, insbesondere auf der Cellulosefaser, nach den Methoden der Eisfarbentechnik, nach welcher man das mit einer Kupplungskomponente grundierte Fasermaterial in wäßrigem Medium mit der Diazoniumverbindung eines aromatischen Amins zusammenbringt und kuppelt, das dadurch gekennzeichent ist, daß man als bis-diazotierbare Diazokomponente eine Verbindung der allgemeinen Formel (1)

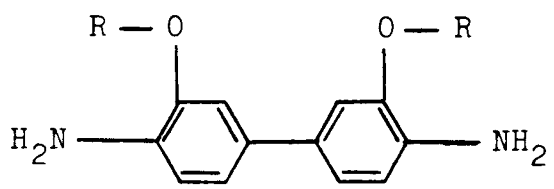

(1)

in welcher jedes R, zueinander gleich oder voneinander verschieden, eine geradkettige oder verzweigte Alkylgruppe von 3 bis 5 C-Atomen oder eine ($C_1$-$C_3$)-Alkoxy-($C_2$-$C_4$)-alkyl-Gruppe mit geradkettigen und/oder verzweigten Alkylgruppen von insgesamt 3 bis 5 C-Atomen ist, und als Kupplungskomponente eine Verbindung entsprechend der allgemeinen Formel (2)

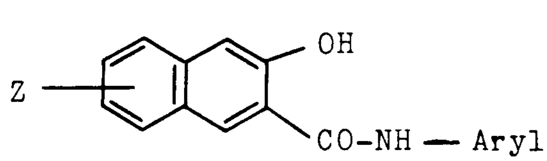

(2)

in welcher Z bevorzugt in 6- oder 7-Stellung gebunden ist und für ein Wasserstoffatom oder ein Halogenatom, wie ein Bromatom, oder eine Alkoxygruppe von 1 bis 4 C-Atomen, wie die Methoxy- oder Ethoxygruppe, steht und Aryl einen Phenylrest oder einen 1-Naphthylrest bedeutet, das durch 1, 2 oder 3 Substituenten aus der Gruppe Halogen, wie Brom und insbesondere Chlor, Nitro, Alkyl von 1 bis 4 C-Atomen, wie Ethyl und insbesondere Methyl, und Alkoxy von 1 bis 4 C-Atomen, wie Ethoxy und insbesondere Methoxy, substituiert sein kann, verwendet und die Kupplungsreaktion und Farbstoffbildung auf der Faser bei einem pH-Wert zwischen 4 und 10, vorzugsweise zwischen 6 und 9, durchführt.

Diamino-biphenyl-Verbindungen der allgemeinen Formel (1) sind beispielsweise:

4,4'-Diamino-3,3'-bis-(1-methyl-ethoxy)-biphenyl, 4,4'-Diamino-3,3'-dibutoxy-biphenyl, 4,4'-Diamino-3,3'-bis-(1-methyl-propoxy)-biphenyl, 4,4'-Diamino-3,3'-bis(2-methyl-propoxy)-biphenyl, 4,4'-Diamino-3,3'-bis-(1,1-dimethyl-ethoxy)-biphenyl, 4,4'-Diamino-3,3'-dipentoxy-biphenyl, 4,4'-Diamino-3,3'-bis-(3-methyl-butoxy)-biphenyl, 4,4'-Diamino-3,3'-bis-(2-methoxy-ethoxy)-biphenyl und 4,4'-Diamino-3,3'-bis-(2-ethoxy-ethoxy)-biphenyl.

Kupplungskomponenten der allgemeinen Formel (2) sind beispielsweise:
das Phenylamid, das 2-Methylphenylamid, das 2-Ethylphenylamid, das 2-Methoxyphenylamid, das 4-Methoxyphenylamid, das 2-Ethoxyphenylamid, das 4-Chlorphenylamid, das 4-Chlor-2-methyl-phenylamid, das 3-Nitrophenylamid, das 5-Chlor-2-methoxy-phenylamid, das 4-Methoxy-2-methyl-phenylamid, das 2,5-Dimethoxyphenylamid, das 5-Chlor-2,4-dimethoxyphenylamid, das 4-Chlor-2,5-dimethoxy-phenylamid, das 4-Chlor-2-methoxy-5-methyl-phenylamid, das 5-Brom-2-methoxy-phenylamid und das Naphth-1-yl-amid der 2-Hydroxy-naphthalin-3-carbonsäure, das 6-Brom-2-hydroxy-naphthalin-3-carbonsäure-(2-methoxyphenyl)-amid, 6-Methoxy-2-hydroxy-naphthalin-3-carbonsäure-phenylamid und 6-Methoxy-2-hydroxy-naphthalin-3-carbonsäure-(4-chlor-2,5-dimethoxy-phenyl)-amid.

Die beiden Formelreste R haben bevorzugt eine zueinander gleiche Bedeutung. R ist beispielsweise eine n-Propyl-, iso-Propyl-, n-Butyl-, iso-Butyl-, sek.-Butyl-, tert.-Butyl-, 2-Methoxy-ethyl-, 2-Methoxy-n-propyl-, 3-Methoxy-n-propyl-, 2-Methoxy-iso-propyl-, 2-Ethoxy-ethyl-, n-Pentyl- oder iso-Pentyl-Gruppe.

Insbesondere bevorzugt ist R eine n-Propyl-, n-Butyl-, iso-Propyl-, 2-Methoxy-ethyl- und 2-Ethoxy-ethyl-Gruppe.

Bevorzugt bedeutet Aryl den Phenyl-, 2-Methyl-phenyl-, 2-Methoxy-phenyl-, 4-Methoxy-phenyl-, 2-Ethoxy-phenyl-, 4-Ethoxy-phenyl-, 4-Methoxy-2-methyl-phenyl-, 2,5-Dimethoxy-phenyl-, 4-Chlor-phenyl-, 4-Chlor-2-methyl-phenyl-, 5-Chlor-2-methoxy-phenyl-, 4-Chlor-2-methoxy-5-methyl-phenyl-, 4-Chlor-2,5-dimethoxy-phenyl-, 5-Chlor-2,4-dimethoxy-phenyl-und den 1-Naphthyl-Rest.

Die Bildung der Disazofarbstoffe mit den Komponenten entsprechend den allgemeinen Formeln (1) und (2) erfolgt gemäß den Verfahrensweisen der Eisfarbentechnik, die in der Literatur vielfach beschrieben sind (s. bspw. K. Venkataraman, The Chemistry of Synthetic Dyes, Vol. I, S. 650-704, insbes. S. 668-672, Academic Press New York (1952)). Hierfür bringt man ein Fasermaterial, insbesondere ein Cellulosefasermaterial, das zuvor mit der Kupplungskomponente entsprechend der allgemeinen Formel (2) alkalisch vorgrundiert wurde, mit einem Bis-Diazoniumsalz der Diaminoverbindung entsprechend der allgemeinen Formel (1) in wäßrigem Medium zusammen. Dies kann allgemein so geschehen, daß man analog üblicher Methoden der Eisfarbentechnik das mit einer alkalischen wäßrigen Lösung der Kupplungskomponente grundierte Material mit einer getrennt hergestellten wäßrigen Lösung des Bisdiazoniumsalzes, das so viel sauerwirkende Mittel und/oder Puffersubstanzen enthält, daß sich ein pH-Bereich zwischen 4 und 10, vorzugsweise zwischen 6 und 9, einstellt und die Kupplungsreaktion sodann innerhalb dieses pH-Bereiches abläuft, zusammenbringt. Man kann aber auch die Diaminobiphenyl-Verbindung in wäßrigem Medium in Gegenwart des grundierten Materials bis-diazotieren, wobei gleichzeitig oder anschließend die Kupplungsreaktion durchgeführt wird; für diese Variante wird entweder die Diazotierung im schwach sauren Medium durchgeführt oder anschließend an die Diazotierung der pH auf einen für die Kupplungsreaktion günstigen Wert zwischen 4 und 10 gebracht.

Für alle diese Durchführungsformen wird zweckmäßig die Menge der bei der Diazotierung verwendeten Säure und/oder die Menge des Alkalis im grundierten Material bzw. des wäßrigen Mediums, in welchem das zu färbende, grundierte Material vorliegt, bereits zuvor so bemessen, daß, erforderlichenfalls durch Zusatz von Puffersubstanzen oder Puffergemischen, der erwünschte pH-Wert für die durchzuführende Kupplung sich gleich einzustellen vermag.

Die Bis-Diazotierung der Verbindungen (1) als auch deren Kupplungsreaktion mit den Verbindungen (2) erfolgt bei den in der Eisfarbentechnik üblichen Temperaturen, so beispielsweise bei einer Temperatur zwischen 0 und 35 °C.

Im einzelnen kann man beispielsweise wie folgt vorgehen: Die Diamino-biphenyl-Verbindung wird, vorzugsweise in verdünnter wäßriger Salzsäure, mittels einer wäßrigen Natriumnitritlösung diazotiert; danach wird überschüssige Mineralsäure mit einem säurebindenden Mittel, wie beispielsweise Natriumacetat, Natriumbicarbonat oder Natriumphosphat, gebunden und die wäßrige Bis-Diazoniumsalz-Lösung anschließend gegebenenfalls nach Zugabe eines alkalibindenden Mittels, wie Essigsäure, Natriumdihydrogenphosphat, Borsäure oder Chromacetat, als Färbeflotte oder Färbebad verwendet. Dieses kann mittels eine Foulards auf das zu färbende Material, hier insbesondere ein Gewebe, das zuvor mit dem Alkalisalz der Kupplungskomponente entsprechend der allgemeinen Formel (2) imprägniert und getrocknet worden war, aufgebracht werden. Man kann diese Flotte auch in der Weise verwenden, daß man das imprägnierte, zu färbende Material, wie in Form eines Gewebes oder in Form von Fäden oder Garnen, in diese wäßrige Bis-Diazoniumsalz-Lösung als Färbebad einbringt und es darin bewegt, sei es per Hand oder sei es durch oder

in entsprechende(n), in der Technik übliche(n) Apparate(n), wie Haspelkufe, Jigger oder eine(r) Jet-Apparatur. Hierbei wird der erforderliche Kupplungsbereich zwischen 4 und 10 durch entsprechende säurebindende oder alkalibinende Mittel oder Puffersubstanzen eingestellt und gehalten.

Eine andere Variante der Farbstoffbildung kann nach einem Druckverfahren erfolgen, indem man die wäßrige Lösung des Bisdiazoniumsalzes mit einem geeigneten und in der Technik üblichen Mittel, wie Stärke, Traganth, einem Celluloseether oder Celluloseester, verdickt und ein mit dem Alkalisalz der Kupplungskomponente imprägniertes Gewebe mit dieser verdickten Lösung bedruckt, wobei man auch hier einen entsprechenden Kupplungs-pH-Wert zwischen 4 und 10 durch entsprechende Wahl der säurebindenden oder alkalibindenden Mittel oder Puffersubstanzen und mit den hierfür benötigten Mengen einstellt und aufrechterhält.

Eine andere Variante des erfindungsgemäßen Verfahrens zur Herstellung von Disazofarbstoffen mit den obengenannten Komponenten (1) und (2) auf der Faser besteht darin, daß man eine verdickte, zusätzlich eine schwache oder mittelstarke Säure enthaltende Lösung oder Dispersion des Diaminobiphenyls der allgemeinen Formel (1) auf das zu färbende Gewebe, das zuvor mit dem Alkalisalz der Kupplungskomponente und Natriumnitrit imprägniert worden war, aufdruckt.

Das gefärbte Material wird anschließend, wie in der Eisfarbentechnik üblich, durch gründliches Spülen mit Wasser, alkalisches Seifen, nochmaliges Spülen mit Wasser und Trocknen fertiggestellt. Die erfindungsgemäß erhältlichen Färbungen zeigen gute Echtheitseigenschaften, insbesondere sehr gute Naßechtheiten, von denen insbesondere die Waschechtheiten bei verschiedenen Temperaturen, die Peroxidwaschechtheit, die Sodakochechtheit, die Mercerisierechtheit, die Bleich-, Trockenreinigungs- und Reibechtheit hervorgehoben werden können.

Die Kupplungskomponenten der allgemeinen Formel (2) sind zahlreich in der Literatur beschrieben. Ebenso sind die Diamino-biphenyl-Verbindungen der allgemeinen Formel (1) teilweise aus der Literatur bekannt (s. Chem. Abstracts, 55, 23435g). Sofern die Amino-biphenyl-Verbindungen der allgemeinen Formel (1) neu sind, können sie analog den bekannten Verbindungen, so allgemein gemäß den Verfahrensweisen der Synthese von Benzidinverbindungen, hergestellt werden, wie durch Reduktion der entsprechenden 2-Nitro-alkoxy-benzol- oder 2-Nitro-(alkoxyalkoxy)-benzol-Verbindung in alkalischem Medium zur entsprechenden Di-(alkoxyphenyl)-bzw. Di-(alkoxyalkoxy-phenyl)-hydrazin-Verbindung, die sodann in stark saurem Medium zur entsprechenden 4,4'-Diamino-3,3'dialkoxy- bzw. -di-(alkoxyalkoxy)-biphenyl-Verbindung umgelagert wird.

Die nachstehenden Beispiele dienen zur Erläuterung der Erfindung. Die darin genannten Teile sind Gewichtsteile und die Prozentangaben stellen Gewichtsprozente dar, sofern nicht anders vermerkt.

## Beispiel 1

a) Ein Baumwollgewebe wird zunächst mit einer Kupplungskomponente grundiert, indem man es mit einer wäßrigen Flotte, bestehend aus einer wäßrigen Lösung von 12,5 Teilen 2-Hydroxy-naphthalin-3-carbonsäure-phenylamid, 17 Teilen einer wäßrigen 32%igen Natronlauge und 5 Teilen eines handelsüblichen Färbe- und Egalisierhilfsmittels auf Basis eines Fettsäure-Eiweißabbauprodukt-Kondensationsproduktes in 1000 Teilen Wasser, mit einer Flottenaufnahme von 80 %, bezogen auf das Gewebe, klotzt.

b) Getrennt hiervon wird ein Entwicklungsbad mit dem Bisdiazoniumsalz hergestellt. Hierzu werden 30 Teile einer Lösung bestehend aus 33 % 4,4'-Diamino-3,3'-di-(n-butoxy)-biphenyl, das einen Schmelzpunkt von 75° C besitzt, 52 % N-Methyl-pyrrolidon und 15 % eines Anlagerungsproduktes aus Rizinusöl und 30 Mol Ethylenoxid, in ein 20° C warmes Gemisch aus 350 Teilen Wasser und 21 Teilen einer 32%igen wäßrigen Salzsäure unter gutem Rühren eingetragen. Unter weiterem guten Rühren erfolgt sodann die Bis-diazotierung durch allmähliche Zugabe von 4,7 Teilen Natriumnitrit in Form einer konzentrierten wäßrigen Lösung. Nach etwa 10 Minuten wird überschüssige Säure durch 5 Teile Natriumhydrogencarbonat gebunden. 13 Teile Borsäure werden zugegeben und die Lösung mit Wasser auf 1000 Teile aufgefüllt.

c) Das unter a) foulardierte und danach getrocknete Gewebe wird in einem zweiten Foulard mit dem unter b) beschriebenen Entwicklungsbad bei Raumtemperatur bei einer Flottenaufnahme von 80 % überklotzt. Nach einem Luftgang von etwa einer Minute wird das überklotzte Gewebe einer Heißwasserpassage zugeführt und sodann in üblicher Weise durch Spülen in kaltem und heißem Wasser, durch heißes Seifen, Spülen in heißem und kaltem Wasser und Trocknen nachbehandelt und fertiggestellt.

Es wird eine blaue Färbung mit guter Farbausbeute und guten Echtheiten, insbesondere guten Reibechtheiten und sehr guten Waschechtheiten erhalten.

## Beispiel 2

Zur Herstellung einer blauen Färbung auf Baumwolle verfährt man gemäß der Verfahrensweise gemäß des Beispieles 1, setzt jedoch anstelle des dort verwendeten Entwicklungsbades ein Entwicklungsbad ein, das in gleicher Weise wie das im Beispiel 1 b), jedoch unter Verwendung von 4,4'-Diamino-3,3'-bis-(1-methyl-n-propoxy)-biphenyl in äquivalenter Menge, hergestellt wurde.

Man erhält eine blaue Färbung in guter Farbausbeute und mit guten Echtheitseigenschaften, wie insbesondere guten Waschechtheiten.

Beispiel 3

Zur Herstellung einer blauen Färbung auf Baumwolle verfährt man gemäß der Verfahrensweise des Beispieles 1, verwendet jedoch anstelle der dort eingesetzten Entwicklungsflotte eine wäßrige Flotte, die in entsprechender Weise wie im Beispiel 1 b) beschrieben durch Bis-diazotierung von 30 Teilen einer Lösung mit einem Gehalt von 30 % 4,4'-Diamino-3,3'-bis-(1-methyl-ethoxy)-biphenyl, 15% eines Anlagerungsproduktes aus Rizinusöl und etwa 36 Mol Ethylenoxid und 55 % Methyldiglykol erhalten wurde.

Die blaue Baumwollfärbung wird in guter Farbausbeute und in guten Echtheiten, insbesondere guten Wasch- und Peroxidwaschechtheiten, erhalten.

Beispiel 4

a) Es wird zunächst die folgende Grundierungsflotte hergestellt: 8 Teile 2-Hydroxy-naphthalin-3-carbonsäure-(4-chlor-2-methyl-phenyl)-amid werden mit 13 Teilen Ethanol angeteigt und durch Zugabe von 5,5,Teilen einer 32%igen wäßrigen Natronlauge sowie 16 Teilen Wasser von 40 °C gelöst. 8 Teile einer 33%igen wäßrigen Formaldehydlösung werden zugegeben, und die so bereitete Stammlösung wird nach 10 Minuten in eine 35 °C warme Lösung von 44 Teilen einer 32%igen wäßrigen Natronlauge, 120 Teilen Natriumchlorid und 18 Teilen eines handelsüblichen Fettsäure-Eiweißabbauprodukt-Kondensationsproduktes in 6000 Teilen weichem Wasser eingerührt. Mit dieser Grundierungsflotte wird in einem Kreuzspulapparat eine Kreuzspule mit 600 Teilen Baumwollgarn, das zur Entfernung von störenden Nichtcellulose-Substanzen alkalisch mit einem Tensid und mit Sequestriermittel abgekocht worden war, 30 Minuten lang durchflossen. Anschließend wird die Grundierungsflotte abgelassen und die grundierte Spule 10 Minuten lang mit einer Lösung von 240 Teilen Natriumchlorid und 4 Teilen einer 32%igen wäßrigen Natronlauge in 6000 Teilen Wasser gespült. Das Spülbad wird anschließend abgelassen.

b) Sodann wird dem Kreuzspulapparat eine Entwicklungsflotte zugeführt, die wie folgt bereitet wird: 6 Teile 4,4'-Diamino-3,3'-bis-(1-methyl-ethoxy)-biphenyl-dichlorhydrat werden unter gutem Rühren in eine Mischung aus 50 Teilen Wasser und 8,5 Teilen einer 32%igen Salzsäure eingerührt. Etwa 20 Teile Eis werden zugesetzt und die Diaminobiphenylverbindung wird unter gutem Rühren durch allmähliche Zugabe von 2,6 Teilen Natriumnitrit in konzentriert-wäßriger Lösung bis-diazotiert.

Man rührt 30 Minuten nach und gießt diese Stammlösung sodann in eine Lösung aus 17 Teilen Natriumdihydrogenphosphat-dihydrat, 60 Teilen Dinatriumhydrogenphosphat-dodekahydrat und 12 Teilen eines Octadecylalkoholpolyglykolethers in 6000 Teilen Wasser ein.

Diese Entwicklungsflotte wird 30 Minuten lang bei 20 °C durch die grundierte Kreuzspule gepumpt und anschließend aus dem Apparat abgelassen. Die Kreuzspule wird sodann in üblicher Weise mit einer essigsauren wäßrigen Lösung gespült, sodann mit kaltem Wasser klargespült und zunächst bei 60 °C, dann bei 100 °C geseift, anschließend mit warmem und kaltem Wasser gespült und schließlich getrocknet.

Es wird eine blaue Baumwollfärbung in guter Farbausbeute und mit guten Echtheiten, wie insbesondere Waschechtheiten erhalten.

Beispiel 5

a) 2,8 Teile 2-Hydroxy-naphthalin-3-carbonsäure-(naphth-1-yl)-amid werden mit einer Mischung aus 4 Teilen Ethanol, 4 Teilen Wasser, 2 Teilen einer 32%igen wäßrigen Natronlauge und 2 Teilen einer 33%igen wäßrigen Formaldehydlösung übergossen und durch Rühren gelöst. Nach etwa 10 Minuten wird diese Lösung in 1000 Teile Wasser, die 8,5 Teile einer 32%igen wäßrigen Natronlauge und 2 Teile eines Fettsäure-Eiweißabbauprodukt-Kondensationsproduktes gelöst enthält, gegeben. In das so hergestellte Bad trägt man 50 Teile eines gebleichten, abgekochten und vorgenetzten Baumwollgarnes ein und bewegt es darin 30 Minuten. Es wird sodann herausgenommen und in einer Lösung von 30 Teilen Natriumchlorid und 1,3 Teilen einer 32%igen Natronlauge in 1000 Teilen Wasser gespült.

b) Getrennt hiervon wird das Entwicklungsbad mit dem Bis-diazoniumsalz von 4,4'-Diamino-3,3'-di-(n-butoxy)-biphenyl wie folgt hergestellt: 1,35 Teile dieser Biphenylverbindung werden in einem heißen Gemisch aus 30 Teilen Wasser und 2,4 Teilen wäßriger 32%iger Salzsäure gelöst. Man kühlt die Lösung ab, gibt 10 Teile Eis hinzu und bisdiazotiert sodann mit 0,58 Teilen Natriumnitrit in konzentriert-wäßriger Lösung. Nach Beendigung der Diazotierung wird überschüssige Säure mit Natriumhydrogencarbonat (etwa 1 Teil) gebunden, die Lösung sodann mit Wasser auf 1000 Teile verdünnt und noch 5 Teile Chrom(III)-acetat sowie 1 Teil eines Alkylpolyglykolethers darin gelöst.

c) Zur Herstellung der Färbung auf dem Textilmaterial verfährt man beispielsweise wie folgt:

Das gemäß a) grundierte und gespülte Gewebe wird in das unter b) beschriebene Entwicklungsbad eingebracht und darin 30 Minuten bei einer Temperatur von etwa 20 °C behandelt. Anschließend wird das Material herausgenommen, wie üblich gespült, geseift, nochmals gespült und getrocknet.

Es wird eine blaue Färbung in guter Farbausbeute mit guten Echtheiten, insbesondere sehr guten Waschechtheiten erhalten.

Beispiel 6

Man kann zur Herstellung einer blauen Färbung gemäß der Verfahrensweise des Beispieles 5 verfahren, wobei man das Bis-diazoniumsalz auch in Form eines kristallinen Chlorzinkatsalzes gemäß dem nachfolgenden Abschnitt a) oder in Form einer Präparation dieses Chlorzinkatsalzes zur Bereitung eines Entwicklungsbades einsetzen kann:

(a) 328 Teile 4,4'-Diamino-3,3'-di-(n-butoxy)-biphenyl werden in 600 Teilen Wasser gut verrührt. 260 Teile einer wäßrigen 32 %igen Salzsäure werden langsam hinzugegeben; es bildet sich eine breiige Suspension des Chlorhydrates, die noch eine Stunde nachgerührt wird. Zur Vervollständigung der Chlorhydratbildung werden sodann weitere 320 Teile der 32%igen wäßrigen Salzsäure zugegeben. Die Suspension wird auf etwa 20 °C abgekühlt, und 370 Teile einer 40%igen wäßrigen Natriumnitritlösung werden so zugegeben, daß Nitrit bzw. salpetrige Säure nicht oder jeweils nur in schwachem Überschuß vorliegen. Hierbei steigt die Reaktionstemperatur auf 30 bis 35 °C an; sie wird bis zum Ende der Diazotierungsreaktion bei 30 bis 35 °C gehalten. Nach beendeter Diazotierung soll jedoch ein deutlicher Nitritüberschuß vorhanden sein. Die so erhaltene Lösung des Bis-diazoniumsalzes behandelt man unter Abkühlung etwa 5 Minuten lang mit 10 Teilen Klärkohle. Durch eine Tüpfelprobe auf einem Filterpapier prüft man, ob der Auslauf rein gelb ist; man verrührt in diesem Falle den Ansatz noch mit 10 Teilen Kieselgur und saugt sodann ab (ist der Auslauf noch braun, muß zusätzlich Klärkohle zugegeben werden). Der Rückstand wird mit wenig Wasser gewaschen. Die vereinigten Filtrate werden langsam unter Rühren und allmählicher Abkühlung auf etwa 15 °C mit 450 Teilen einer 33%igen wäßrigen Zinkchloridlösung versetzt. Hierbei scheidet sich das 3,3'-Di-(n-butoxy)-biphenyl-4,4'-bis-(diazonium)-tetrachlorzinkat in schönen gelben Kristallen ab. Durch Zugabe von 250 Teilen Natriumchlorid wird die Fällung vervollständigt. Das Bis-diazoniumsalz wird abgesaugt und durch Zentrifugieren vom größen Teil der anhaftenden Mutterlauge befreit. Der Restfeuchtegehalt beträgt noch etwa 8 %.

b) Das unter a) hergestellte Bis-diazoniumsalz kann nach Vermischen mit etwa 450 Teilen Natriumsulfat und anschließender Trocknung oder auch vorteilhaft in Form der nachfolgend beschriebenen Präparation in das erfindungsgemäße Verfahren zur Herstellung eines Disazofarbstoffes auf der Faser eingesetzt werden. Zur Herstellung der Präparation wird das unter a) erhaltene feuchte Diazoniumsalz in einem säurefest ausgekleideten Mischer, der einen Kühlmantel besitzt, mit 50 Teilen Aluminiumsulfat-hexahydrat, 130 Teilen Magnesiumsulfat-monohydrat und 380 Teilen Natriumsulfat vermischt, wobei man so vorgeht, daß man die anorganischen Salze vorlegt und das feuchte Diazoniumsalz portionsweise einträgt. Die dabei auftretende Hydratationswärme wird durch Außenkühlung abgeführt.

Nach der Bestimmung des Reingehaltes der Präparation an dem Bis-diazoniumsalz wird weiteres Natriumsulfat bis auf eine bestimmte Einstellung, z.B. auf einen Gehalt von 20 % des Bis-diazoniumsalzes, bezogen auf das Molgewicht 328 der Diaminobiphenyl-Verbindung, zugegeben. Es wird so ein stabiles Färbepräparat erhalten.

c) Das zur Herstellung des Disazofarbstoffes auf dem Textilmaterial dienende Entwicklungsbad wird durch Lösen von 6,75 Teilen des gemäß Abschnitt b) hergestellten Präparates sowie von 5 Teilen Chrom(III)-acetate und 1 Teil eines Alkylpolyglykolethers in 1000 Teilen Wasser bereitet.

Man erhält gemäß Beispiel 5 eine blaue Färbung in gleich guter Farbausbeute und guten Echtheiten wie die gemäß Beispiel 1 oder 5 erhaltene Färbung.

Beispiel 7

Zur Herstellung einer Baumwollfärbung unter Verwendung von 4,4'-Diamino-3,3'-bis-(2-methoxy-ethoxy)-biphenyl als Bisdiazokomponente kann man gemäß der im Beispiel 5 angegebenen Weise verfahren, indem man bei der Herstellung der Entwicklungsflotte anstelle des dort verwendete Diamino-dibutoxy-biphenyls das hier angegebene Diamino-bis-(methoxyethoxy)-biphenyl einsetzt.

Es wird eine blaue Baumwollfärbung in guter Farbausbeute und mit guten Echtheiten, wie insbesondere Trockenreinigungsechtheiten, erhalten.

Beispiel 8

Die Färbung erfolgt auf einem Jigger:

a) Hierzu wird zunächst die folgende Stammlösung für die Grundierungsflotte hergestellt:
3,5 Teile 2-Hydroxy-naphthalin-3-carbonsäure-(4'-chlor-2,5-dimethoxy-phenyl)-amid werden mit 4,3 Teilen Ethanol angeteigt. 1,9 Teile einer 32%igen wäßrigen Natronlauge werden zugesetzt und sodann 7 Teile Wasser von 40°C eingerührt. Zu dieser Lösung werden 2,5 Teile einer 33%igen wäßrigen Formaldehydlösung gegeben.

b) 330 Teile eines Baumwollgewebes werden etwa 40 Minuten lang bei 20°C mit einer Grundierungsflotte, bestehend aus der unter a) hergestellten Stammlösung und einer Lösung aus 6,3 Teilen einer 32%igen wäßrigen Natronlauge und 5 Teilen eines Fettsäure-Eiweißabbauprodukt-Kondensationsproduktes in 980 Teilen Wasser, behandelt. Hierzu wird das Chassis eines Jiggers zunächst mit der alkalischen, das Kondensationsprodukt enthaltenden Lösung aus den 980 Teilen Wasser beschickt, die eine Hälfte der oben unter a) hergestellten Stammlösung eingerührt, das Baumwollgewebe im Jigger mit dieser Flotte zunächst eine Passage lang behandelt, der Jiggerflotte nach der ersten Passage des Gewebes die zweite Hälfte der obigen Stammlösung zugesetzt und das Gewebe mit dieser Flotte im Jigger, wie angegeben, weiterbehandelt. Nach Beendigung der Grundierung wird die Flotte aus dem Jigger abgelassen.

c) Das Chassis wird mit einer Entwicklungsflotte gefüllt, die wie folgt zubereitet wird:
8 Teile der in Beispiel 1 b) beschriebenen wäßrig-organischen Lösung von 4,4'-Diamino-3,3'-dibutoxy-biphenyl werden in eine 20°C warme Mischung aus 100 Teilen Wasser und 4,6 Teilen einer 32%igen wäßrigen Salzsäure eingerührt; in dieser Lösung wird das Diaminobiphenyl unter Rühren durch Zugabe von 1,2 Teilen Natriumnitrit in Form einer konzentriert wäßrigen Lösung bis-diazotiert. Nach etwa 10 Minuten wird überschüssige Säure mit etwa 0,5 Teilen Natriumhydrogencarbonat gebunden, sodann werden 5 Teile Borsäure zugegeben und das Ganze mit Wasser auf 1000 Teile aufgefüllt.
Das grundierte Gewebe wird mit dieser Entwicklungsflotte im Jigger etwa 30 Minuten lang behandelt, anschließend herausgenommen und in üblicher Weise nachbehandelt und fertiggestellt.

Das Baumwollgewebe wird in einer gedeckten Blaufärbung, die gute Echtheitseigenschaften besitzt, erhalten.

Beispiel 9

Zur Herstellung eines blauen Druckmusters verfährt man beispielsweise wie folgt:
Man grundiert ein Baumwollgewebe mit 2-Hydroxy-naphthalin-3-carbonsäurephenylamid gemäß den Angaben des Beispieles 1 a), trocknet es und bedruckt es auf einer Film- oder Rouleaux-Druckmaschine mit einer Druckpaste, die wie folgt zubereitet wird:
30 Teile der im Beispiel 1 b) beschriebenen organischen Lösung des Diamino-dibutoxy-biphenyls werden in eine 20°C warmes Gemisch aus 350 Teilen Wasser und 18 Teilen einer 32%igen wäßrigen Salzsäure unter gutem Rühren eingetragen; das Diaminobiphenyl wird sodann unter weiterem gutem Rühren durch Zugabe von 4,7 Teilen Natriumnitrit in Form einer konzentrierten wäßrigen Lösung bisdiazotiert. Man rührt noch 10 Minuten nach und versetzt die erhaltene Bisdiazoniumsalzlösung mit 9 Teilen kristallisiertem Natriumaacetat und 7,5 Teilen Essigsäure und füllt das Ganze mit einer Druckverdickung und Wasser auf 1000 Teile auf.

Das mit dieser Druckpaste bedruckte Gewebe wird in üblicher Weise, wie beispielsweise in den vorherigen Beispielen erwähnt, nachbehandelt und fertiggestellt. Es wird ein kräftiges blaues Druckmuster mit guten Echtheitseigenschaften, die denen der gemäß Beispiel 1 erhältlichen Färbung entsprechen, erhalten.

Beispiel 10

Zur Herstellung einer blauen Färbung verfährt man gemäß der im Beispiel 1 angegebenen Weise, verwendet jedoch als Kupplungskomponente das 2-Hydroxy-naphthalin-3-carbonsäure-(2-methyl-phenyl)-amid in äquivalenter Menge. Man erhält ebenfalls eine blaue Baumwollfärbung in guter Farbausbeute mit

guten Echtheitseigenschaften, wie beispielsweise guten Wasch- und Reibechtheiten.

Beispiel 11

Zur Herstellung einer blauen Färbung verfährt man gemäß der im Beispiel 2 angegebenen Weise, verwendet jedoch als Kupplungskomponente das 2-Hydroxy-naphthalin-3-carbonsäure-(2-methyl-phenyl)-amid in äquivalenter Menge. Man erhält ebenfalls eine blaue Baumwollfärbung in guter Farbausbeute mit guten Echtheitseigenschaften, wie beispielsweise guter Sodaechtheit.

Beispiel 12

Zur Herstellung einer blauen Färbung verfährt man gemäß der im Beispiel 3 angegebenen Weise, verwendet jedoch als Kupplungskomponente das 2-Hydroxy-naphthalin-3-carbonsäure-(2-methyl-phenyl)-amid in äquivalenter Menge. Man erhält ebenfalls eine blaue Baumwollfärbung in guter Farbausbeute mit guten Echtheitseigenschaften, wie beispielsweise guten Peroxidwaschechtheiten.

Beispiel 13

Zur Herstellung einer blauen Färbung verfährt man in der im Beispiel 5 oder 6 angegebenen Weise, verwendet jedoch als Kupplungskomponente das 2-Hydroxy-naphthalin-3-carbonsäure-(5-chlor-2-methoxy-phenyl)-amid in äquivalenter Menge.
Man erhält ebenfalls eine kräftige Blaufärbung mit guten Echtheiten, wie insbesondere guten Waschechtheiten.

Beispiel 14

Zur Herstellung einer blauen Färbung verfährt man in der im Beispiel 7 angegebenen Weise, verwendet jedoch als Kupplungskomponente das 2-Hydroxy-naphthalin-3-carbonsäure-(5-chlor-2-methoxy-phenyl)-amid in äquivalenter Menge.
Man erhält ebenfalls eine kräftige Blaufärbung mit guten Echtheiten, wie insbesondere guten Waschechtheiten.

Beispiel 15

Zur Herstellung einer blauen Färbung verfährt man in der im Beispiel 5 oder 6 angegebenen Weise, verwendet jedoch als Kupplungskomponente das 2-Hydroxy-naphthalin-3-carbonsäure-(4-chlor-2-methyl-phenyl)-amid in äquivalenter Menge.
Man erhält ebenfalls eine kräftige Blaufärbung mit guten Echtheiten, wie insbesondere guten Trockenreinigungsechtheiten.

Beispiel 16

Zur Herstellung einer blauen Färbung verfährt man in der im Beispiel 7 angegebenen Weise, verwendet jedoch als Kupplungskomponente das 2-Hydroxy-naphthalin-3-carbonsäure-(4-chlor-2-methyl-phenyl)-amid in äquivalenter Menge.
Man erhält ebenfalls eine kräftige Blaufärbung mit guten Echtheiten, wie insbesondere guten Waschechtheiten.

Beispiel 17

Zur Herstellung eines blauen Druckmusters verfährt man beispielsweise wie folgt:
Man grundiert ein Baumwollgewebe mit 2-Hydroxy-naphthalin-3-carbonsäurephenylamid nach den Angaben des Beispieles 1a), wobei die Lösung aber noch zusätzlich 20 Teile Natriumnitrit enthält, trocknet es und bedruckt es auf einer Film- oder Rouleaux-Druckmaschine mit einer Druckpaste, die wie folgt zubereitet wurde: 400 Teile einer üblichen Druckverdickung werden mit 400 Teilen Wasser verdünnt und 40 Teile einer 90%igen wäßrigen Milchsäurelösung, 10 Teile Essigsäure und 30 Teile der im Beispiel 1 b) beschriebenen organischen Lösung des Diamino-dibutoxy-biphenyls werden nacheinander eingerührt; anschließend wird mit Wasser oder Druckverdickung auf 1000 Teile aufgefüllt. Das bedruckte Gewebe wird

wie üblich mit Heißluft getrocknet und, wie in den vorangehenden Beispielen erwähnt, nachbehandelt und fertiggestellt.

Man erhält ein kräftiges blaues Druckmuster mit guten Echtheitseigenschaften, von denen insbesondere die guten Wasch- und Reibechtheiten genannt werden können.

## Patentansprüche

1. Verfahren zur Herstellung von wasserunlöslichen Disazofarbstoffen auf der Faser, insbesondere auf der Cellulosefaser, nach den Methoden der Eisfarbentechnik, nach welcher man das mit einer Kupplungskomponente grundierte Fasermaterial in wäßrigem Medium mit der Diazoniumverbindung eines aromatischen Diamins zusammenbringt und kuppelt, dadurch gekennzeichnet, daß man als bis-diazotierbare Diazokomponente eine Verbindung der allgemeinen Formel (1)

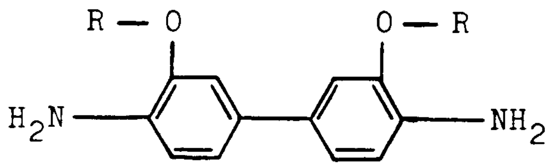

(1)

in welcher jedes R eine geradkettige oder verzweigte Alkylgruppe von 3 bis 5 C-Atomen oder eine ($C_1$-$C_3$)-Alkoxy ($C_2$-$C_4$)-alkyl-Gruppe mit geradkettigen und/oder verzweigten Alkylgruppen von insgesamt 3 bis 5 C-Atomen ist, und als Kupplungskomponente eine Verbindung entsprechend der allgemeinen Formel (2)

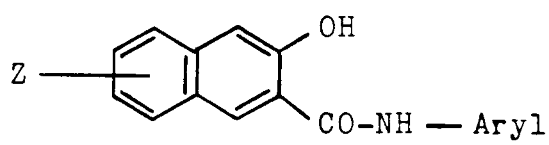

(2)

in welcher Z für ein Wasserstoffatom oder ein Halogenatom oder eine Alkoxygruppe von 1 bis 4 C-Atomen steht und Aryl einen Phenylrest oder einen 1-Naphthylrest bedeutet, die beide durch 1, 2 oder 3 Substituenten aus der Gruppe Halogen, Nitro, Alkyl von 1 bis 4 C-Atomen und Alkoxy von 1 bis 4 C-Atomen substituiert sein können, verwendet und die Kupplungsreaktion und Farbstoffbildung auf der Faser bei einem pH-Wert zwischen 4 und 10 durchführt.

2. Verfahren nach Anspruch 1 dadurch gekennzeichnet, daß man die Kupplungsreaktion und Farbstoffbildung bei einem pH-Wert zwischen 6 und 9 durchführt.

3. Verfahren nach Anspruch 1 oder 2, dadurch gekennzeichnet, daß in der eingesetzten Kupplungskomponente der Formel (2) der Substituent Z in 6- oder 7-Stellung an den Naphthalinkern gebunden ist.

4. Verfahren nach Anspruch 1 oder 2, dadurch gekennzeichnet, daß in der eingesetzten Kupplungskomponente der Formel (2) der Formelrest Z für ein Wasserstoffatom steht.

5. Verfahren nach einem der Ansprüche 1 bis 4, dadurch gekennzeichnet, daß in der verwendeten Diamino-biphenyl-Verbindung der Formel (1) jeder der Reste R für eine Propylgruppe steht.

6. Verfahren nach einem der Ansprüche 1 bis 4, dadurch gekennzeichnet, daß in der verwendeten Diamino-biphenyl-Verbindung der Formel (1) jeder der Reste R für eine Butylgruppe steht.

7. Verfahren nach einem der Ansprüche 1 bis 4, dadurch gekennzeichnet, daß in der verwendeten Diamino-biphenyl-Verbindung der Formel (1) jeder der Reste R für eine n-Butyl-Gruppe steht.

8. Verfahren nach einem der Ansprüche 1 bis 4, dadurch gekennzeichnet, daß in der verwendeten Diamino-biphenyl-Verbindung der Formel (1) jeder der Reste R für eine 2-Methoxy-ethoxy-Gruppe

steht.

**9.** Verfahren nach einem der Ansprüche 1 bis 4, dadurch gekennzeichnet, daß in der verwendeten Diamino-biphenyl-Verbindung der Formel (1) jeder der Reste R für eine 2-Ethoxy-ethoxy-Gruppe steht.

**10.** Verfahren nach einem der Ansprüche 1 bis 9, dadurch gekennzeichnet, daß in der verwendeten Kupplungskomponente der Formel (2) der Rest Aryl der Phenyl-, 2-Methyl-phenyl-, 2-Methoxy-phenyl, 4-Methoxy-phenyl-, 2-Ethoxy-phenyl-, 4-Ethoxy-phenyl-, 4-Methoxy-2-methyl-phenyl-,2,5-Dimethoxy-phenyl-, 4-Chlor-phenyl-, 4-Chlor-2-methyl-phenyl-, 5-Chlor-2-methoxy-phenyl-, 4-Chlor-2-methoxy-5-methyl-phenyl-, 4-Chlor-2,5-dimethoxy-phenyl-, 5-Chlor-2,4-dimethoxy-phenyl- oder 1-Naphthyl-Rest ist.

## Claims

**1.** A process for preparing water-insoluble disazo dyes on the fiber, in particular on the cellulose fiber, using azoic dyeing methods, by bringing the fiber material after impregnation with a coupling component into contact with the diazonium compound of an aromatic diamine in aqueous medium and coupling, which comprises using as a bis-diazotizable diazo component a compound of the formula (1)

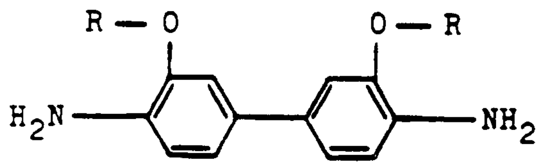

(1)

in which each R is a straight-chain or branched alkyl group of 3 to 5 carbon atoms or a ($C_1$-$C_3$)-alkoxy-($C_2$-$C_4$)-alkyl group having straight-chain and/or branched alkyl groups of in total 3 to 5 carbon atoms, and as the coupling component a compound conforming to the formula (2)

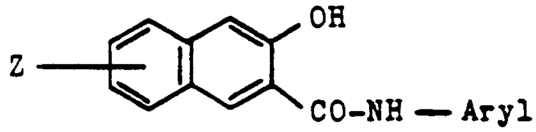

(2)

in which Z stands for a hydrogen atom or a halogen atom or an alkoxy group of 1 to 4 carbon atoms and Aryl denotes a phenyl radical or a 1-naphthyl radical which can be substituted by 1, 2 or 3 substituents from the group consisting of halogen, nitro, alkyl of 1 to 4 carbon atoms and alkoxy of 1 to 4 carbon atoms, and carrying out the coupling reaction and dye formation on the fiber at a pH value between 4 and 10.

**2.** The process as claimed in claim 1, wherein the coupling reaction and dye formation is carried out at a pH value between 6 and 9.

**3.** The process as claimed in claim 1 or 2, wherein in the coupling component of the formula (2) the substituent Z is bonded to the naphthalene nucleus in the 6- or 7-position.

**4.** The process as claimed in claim 1 or 2, wherein in the coupling component of the formula (2) the radical Z stands for a hydrogen atom.

**5.** The process as claimed in any one of claims 1 to 4, wherein in the diaminobiphenyl compound of the formula (1) each of the radicals R stands for a propyl group.

**6.** The process as claimed in any one of claims 1 to 4, wherein in the diaminobiphenyl compound of the formula (1) each of the radicals R stands for a butyl group.

**7.** The process as claimed in any one of claims 1 to 4, wherein in the diaminobiphenyl compound of the

formula (1) each of the radicals R stands for an n-butyl group.

8. The process as claimed in any one of claims 1 to 4, wherein in the diaminobiphenyl compound of the formula (1) each of the radicals R stands for a 2-methoxyethoxy group.

9. The process as claimed in any one of claims 1 to 4, wherein in the diaminobiphenyl compound of the formula (1) each of the radicals R stands for a 2-ethoxyethoxy group.

10. The process as claimed in any one of claims 1 to 9, wherein in the coupling component of the formula (2) the radical Aryl stands for the phenyl, 2-methylphenyl,2-methoxyphenyl, 4-methoxyphenyl, 2-ethoxyphenyl, 4-ethoxyphenyl, 4-methoxy-2-methylphenyl, 2,5-dimethoxyphenyl, 4-chlorophenyl, 4-chloro-2-methyphenyl, 5-chloro-2-methoxyphenyl, 4-chloro-2-methoxy-5-methylphenyl, 4-chloro-2,5-dimethoxyphenyl, 5-chloro-2,4-dimethoxyphenyl or 1-naphthyl radical.

## Revendications

1. Procédé pour créer, ou préparer sur la fibre, notamment sur de la fibre cellulosique, des colorants disazoïques insolubles dans l'eau, que l'on obtient selon les méthodes de la teinture à la glace, procédé selon lequel on combine dans un milieu aqueux la matière fibreuse, apprêtée à l'aide d'un copulant, avec le composé de diazonium d'une diamine aromatique, et l'on soumet à copulation, procédé caractérisé en ce qu'on utilise comme composant bis-diazotable un composé de formule générale (1)

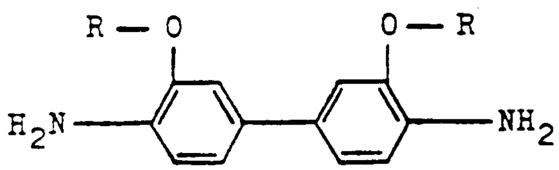

(1)

(dans laquelle chaque R représente un groupe alkyle linéaire ou ramifié ayant 3 à 5 atomes de carbone ou un groupe alcoxy ($C_1$-$C_3$)-alkyle (en $C_2$-$C_4$) comportant des groupes alkyles linéaires et/ou ramifiés ayant au total 3 à 5 atomes de carbone, et comme copulant, un composé répondant à la formule générale (2).

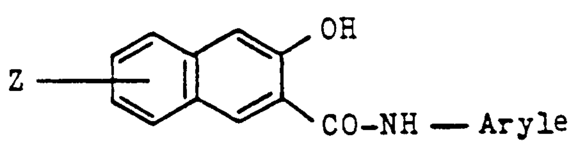

(2)

(dans laquelle Z représente un atome d'hydrogène ou un atome d'halogène ou un groupe alcoxy ayant 1 à 4 atomes de carbone, et le terme aryle désigne un reste phényle ou un reste 1-napthyle, ces deux groupes ou restes pouvant porter 1, 2 ou 3 substituants choisis parmi un atome d'halogène, un groupe nitro, alkyle ayant 1 à 4 atomes de carbone et alcoxy ayant 1 à 4 atomes de carbone) et l'on conduit la réaction de copulation et la formation du colorant sur la fibre en opérant à un pH compris entre 4 et 10.

2. Procédé selon la revendication 1, caractérisé en ce qu'on conduit la réaction de copulation et la formation du colorant à un pH compris entre 6 et 9.

3. Procédé selon la revendication 1 ou 2, caractérisé en ce que, dans le copulant de formule (2) que l'on utilise, le substituant Z est fixé en position 6 ou 7 sur le noyau napthénique.

4. Procédé selon la revendication 1 ou 2, caractérisé en ce que, dans le copulant de formule (2) que l'on utilise, le reste Z représente un atome d'hydrogène.

**5.** Procédé selon l'une des revendications 1 à 4, caractérisé en ce que dans le composé diamino-biphénylique de formule (1) que l'on utilise, chacun des restes R représente un groupe propyle.

**6.** Procédé selon l'une des revendications 1 à 4, caractérisé en ce que, dans le composé diamino-biphénylique de formule (1) que l'on utilise, chacun des reste R représente un groupe butyle.

**7.** Procédé selon l'une des revendications 1 à 4, caractérisé en ce que, dans le composé diamino-biphénylique de formule (1) que l'on utilise, chacun des reste R représente un groupe butyle normal.

**8.** Procédé selon l'une des revendications 1 à 4, caractérisé en ce que, dans le composé diamino-biphénylique de formule (1) que l'on utilise, chacun des reste R représente un groupe 2-méthoxy-éthoxy.

**9.** Procédé selon l'une des revendications 1 à 4, caractérisé en ce que, dans le composé diamino-biphénylique de formule (1) que l'on utilise, chacun des restes R représente un groupe 2-éthoxy-éthoxy.

**10.** Procédé selon l'une des revendications 1 à 9, caractérisé en ce que, dans le copulant de formule (2) que l'on utilise, le reste aryle est le reste phényle, 2-méthyl-phényle, 2-méthoxy-phényle, 4-méthoxy-phényle, 2-éthoxy-phényle, 4-éthoxy-phényle, 4-méthoxy-2-méthyl-phényle, 2,5-diméthoxy-phényle, 4-chloro-phényle, 4-chloro-2-méthyl-phényle, 5-chloro-2-méthoxy-phényle, 4-chloro-2-méthoxy-5-méthyl-phényle, 4-chloro-2,5-diméthoxy-phényle, 5-chloro-2,4-diméthoxy-phényle ou 1-naphtyle.